# EUROPÄISCHE PATENTANMELDUNG

(11) **EP 1 900 270 A1**
(43) Veröffentlichungstag der Anmeldung: **19.03.2008**
(21) Anmeldenummer: 07017620.1
(22) Anmeldetag: 08.09.2007
(51) Int. Cl.: A01B 51/02

(54) **Selbstfahrende landwirtschaftliche Arbeitsmaschine**

(30) Priorität: 14.09.2006 DE 102006043296
(71) Anmelder: Amazonen-Werke H. Dreyer GmbH & Co. KG, 49205 Hasbergen (DE)
(72) Erfinder: Scheufler, Bernd, Dr., 49205 Hasbergen (DE); Ehlen, Volker, 49205 Hasbergen (DE)

(57) **Zusammenfassung**

Selbstfahrende landwirtschaftliche Arbeitsmaschine mit einem sich über Räder auf den Boden abstützenden Rahmen, einem Antriebsmotor und einem Anbauraum zur Aufnahme zumindest eines Vorratsbehälters für zu verteilende Materialien. Um hier in einfacher Weise Abhilfe zu schaffen, ist vorgesehen, dass der Rahmen derart ausgestaltet und der Antriebsmotor an dem Rahmen derart angeordnet ist, dass der Vorratsbehälter unterhalb des Rahmens und des Antriebsmotors angeordnet ist, so dass der Rahmen den Vorratsbehälter zumindest teilweise übergreift.

## Beschreibung

Die Erfindung betrifft eine selbstfahrende landwirtschaftliche Arbeitsmaschine gemäß des Oberbegriffes des Patentanspruches 1.

Eine derartige landwirtschaftliche Arbeitsmaschine ist beispielsweise durch die EP 10 21 943 B1 bekannt. Diese selbstfahrende landwirtschaftliche Arbeitsmaschine ist als selbstfahrende Feldspritze ausgebildet. Sie weist einen Anbauraum oberhalb des Rahmens und hinter dem Antriebsmotor zur Aufnahme eines Vorratsbehälters für zu verteilende Materialien, hier in Wasser gelöste Pflanzenschutzmittel, auf. Hierdurch liegt der Schwerpunkt bei gefüllten Vorratsbehältern, insbesondere bei der Fahrt zur Ausbringstätte, beispielsweise dem Feld relativ hoch. Dieses ist insbesondere bei schneller Transportfahrt, insbesondere in Kurven sehr problematisch.

Der Erfindung liegt die Aufgabe zugrunde, hier in einfacher Weise Abhilfe zu schaffen.

Diese Aufgabe wird erfindungsgemäß dadurch gelöst, dass der Rahmen derart ausgestaltet und der Antriebsmotor an dem Rahmen derart angeordnet ist, dass der Vorratsbehälter unterhalb des Rahmens und des Antriebsmotors angeordnet ist, so dass der Rahmen den Vorratsbehälter zumindest teilweise übergreift. Infolge dieser Maßnahme wird ein relativ niedrig liegender Schwerpunkt für die Arbeitsmaschine, insbesondere bei gefülltem Vorratsbehälter erreicht. Dies ist sehr vorteilhaft bei schneller Transportfahrt mit gefülltem Vorratsbehälter zur Ausbringfläche, beispielsweise einem Feld. In einfacher Weise lässt sich die Anordnung des Vorratsbehälters unterhalb des Rahmens, so dass der Rahmen den Vorratsbehälter zumindest teilweise übergreift dadurch verwirklichen, dass der Rahmen als Portalrahmen ausgebildet ist.

Eine vorteilhafte Anordnung des Antriebsmotors für die selbstfahrende Arbeitsmaschine lässt sich dadurch erreichen, dass der Antriebsmotor oberhalb des am Rahmen anzuordnenden Vorratsbehälters angeordnet ist.

Um in einfacher Weise die selbstfahrende Arbeitsmaschine zum Ausbringen verschiedener Materialien nutzen zu können, ist vorgesehen, dass der Vorratsbehälter in austauschbarer Weise am Rahmen angeordnet ist.

Um in einfacher Weise unterschiedliche Materialien mit der Arbeitsmaschine ausbringen zu können, ist vorgesehen, dass Vorratsbehälter für die Aufnahme von Flüssigkeiten und/oder pulverige oder körnige Materialien vorgesehen sind.

Um in einfacher Weise zu erreichen, dass die sich im Vorratsbehälter befindlichen Flüssigkeiten in einfacher Weise verteilt werden können, ist vorgesehen, dass bei Anordnung eines Flüssigkeit aufnehmenden Vorratsbehälters die die Flüssigkeit zu einem am Rahmen angeordneten Verteilergestänge fördernden und dosierenden Pumpen und Dosierelemente oberhalb des Vorratsbehälters angeordnet sind.

Eine einfache Ausgestaltung eines Vorratsbehälters für pulverförmige und körnige Materialien lässt sich dadurch erreichen, dass der Vorratsbehälter für pulverförmige oder körnige Materialien sich in Längsrichtung unterhalb des Rahmens und des Antriebsmotors erstreckt und sich zumindest teilweise in Längsrichtung der Arbeitsmaschine gesehen sich auch außerhalb des sich oberhalb des Vorratsbehälters befindlichen Antriebsmotor erstreckt und in diesem Bereich einen Einfülltrichter aufweist.

Weitere Einzelheiten der Erfindung sind der Beispielsbeschreibung und den Zeichnungen zu entnehmen. Hierbei zeigen
- Fig. 1: das Grundfahrzeug der landwirtschaftlichen Arbeitsmaschine ohne angebauten Vorratsbehälter und Verteileinheit in Seitenansicht und Prinzipdarstellung,
- Fig. 2: den Vorratsbehälter für körnige und pulverige Materialien mit Verteileinheit in Seitenansicht und Prinzipdarstellung,
- Fig. 3: den Vorratstank für flüssige Materialien mit Verteileinheit in Seitenansicht und Prinzipdarstellung,
- Fig. 4: die selbstfahrende Arbeitsmaschine bestehend aus Trägereinheit und Vorratsbehälter für körnige und pulverige Materialien mit Verteileinheit in Seitenansicht und Prinzipdarstellung und
- Fig. 5: die selbstfahrende Arbeitsmaschine bestehend aus Trägereinheit und Vorratsbehälter für flüssige Materialien mit Verteileinheit in Seitenansicht und Prinzipdarstellung.

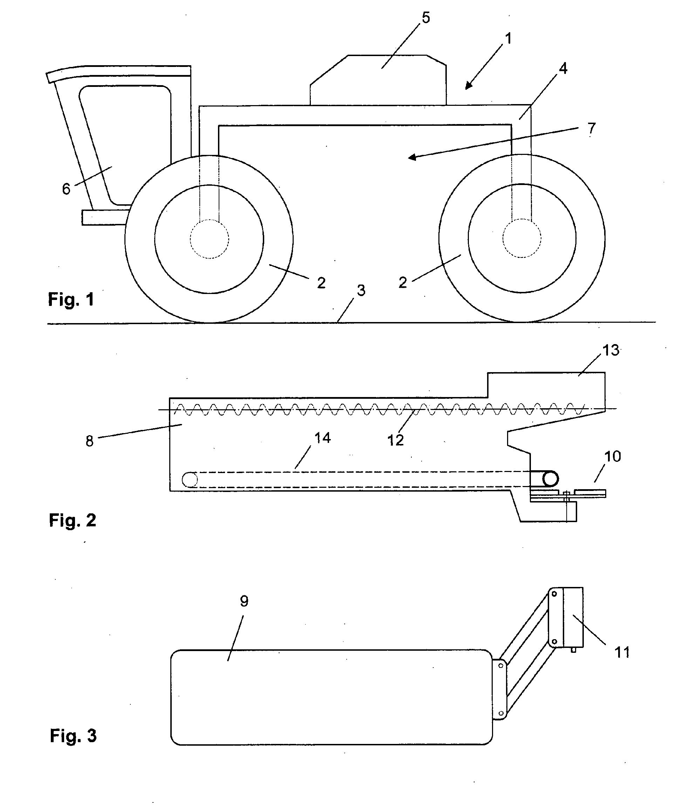

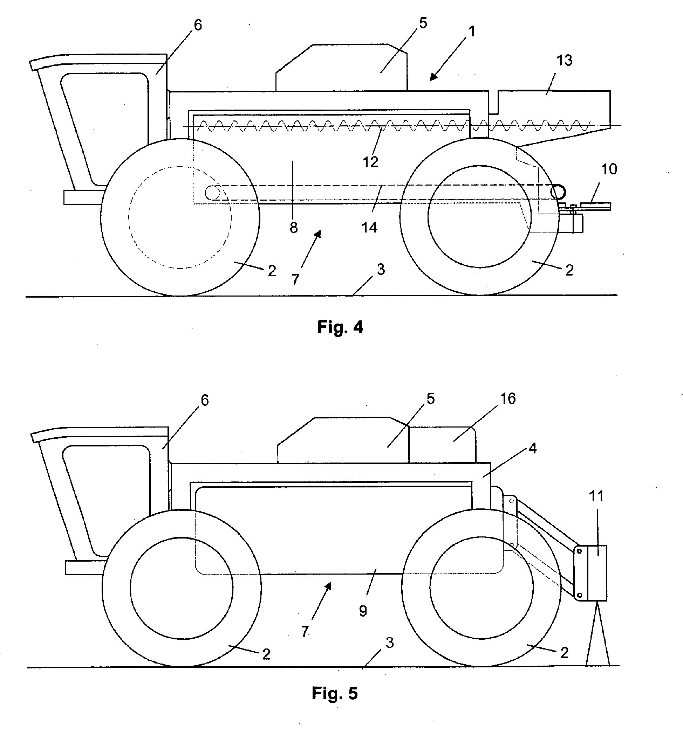

Die selbstfahrende landwirtschaftliche Maschine besteht aus dem Grundfahrzeug 1 mit dem sich über Räder 2 auf dem Boden 3 abstützenden Rahmen 4, Antriebsmotor 5 und Fahrerkabine 6 gemäß Fig. 1. In dem Anbauraum 7 unterhalb des als Portalrahmen ausgebildeten Rahmens 4 können die in Fig. 2 und 3 angeordneten Vorratsbehälter 8 und 9 mit Verteileinheit 10, 11 angeordnet werden, wie die Fig. 4 und 5 zeigen.

Der Vorratsbehälter 8 gemäß Fig. 2 ist für die Aufnahme von pulvrigem oder körnigem Materialen vorgesehen. Dieser Vorratsbehälter 8 erstreckt sich in Längsrichtung unterhalb des Rahmens 4 und des Antriebsmotors 5, wenn er an dem Grundgerät 1 der landwirtschaftlichen Arbeitsmaschine entsprechend Fig. 4 angeordnet ist. Der Vorratsbehälter 8 weist zwei beabstandet zueinander angeordnet und sich zumindest teilweise in Längsrichtung unterhalb des Rahmens 4 und des Antriebsmotors 5 erstreckend angeordnete Förderschnecken 12 auf. Weiterhin weist der Vorratsbehälter einen sich zumindest teilweise in Längsrichtung der Arbeitsmaschine gesehen sich aus außerhalb des sich oberhalb des Vorratsbehälters 8 befindlichen Antriebsmotor 5 erstreckenden Einfülltrichter 13 auf. Innerhalb des Einfülltrichters 13 und im oberen Bereich des Vorratsbehälters 8 sind Längsförderschnecken 12 angeordnet, um das Material in den Bereich des sich unterhalb des Rahmens 4 und des Antriebsmotors 5 befindlichen Vorratsbehälters 8 fördern zu können. Der Boden des Vorratsbehälters 8 wird von einem Förderorgan 14 gebildet, welches antreibbar ist. Dieses Förderorgan 14 fördert das Material zu der sich am Ende des Förderorgans 14 befindlichen, im Ausführungsbeispiel'als rotierende Schleuderscheiben 10 ausgebildeten Verteileinrichtung.

An Stelle des in Fig. 2 dargestellten Vorratsbehälters 8 für körnige und pulverige Materialien zur Anordnung an dem Grundfahrzeug 1 der selbstfahrenden Arbeitsmaschine gemäß Fig. 4 kann der in Fig. 3 dargestellte Vorratsbehälter 9 für flüssige Materialien mit der zugeordneten Verteileinrichtung 11 an dem Grundfahrzeug 1 der selbstfahrenden Arbeitsmaschine entsprechend Fig. 5 angeordnet werden. Bei Anordnung dieses Flüssigkeiten aufnehmenden Vorratsbehälters 9 sind die die Flüssigkeit zu einem am Rahmen angeordneten Verteilergestänge 11 fördernden und dosierende Pumpen und Dosierelemente 16 oberhalb des Vorratsbehälters 9 am Rahmen 4 angeordnet, wie Fig. 5 zeigt.

Durch die Ausgestaltung des Rahmens 4 als Portalrahmen sind die Vorratsbehälter 8, 9 unterhalb des Rahmens 4 und des Antriebsmotors 5 anzuordnen, so dass der Rahmen 4 die Vorratsbehälter 8, 9 jeweils zumindest teilweise übergreifen, wie die Fig. 4 und 5 jeweils zeigen. Somit befindet sich der Antriebsmotor 5 oberhalb der am Rahmen 4 anzuordnenden Vorratsbehälter 8, 9 wie die Fig. 1, 4 und 5 zeigen.

Wie aus dem vorhergehenden und den Zeichnungen sich ergibt, sind die Vorratsbehälter 8, 9 in austauschbarer Weise an dem Rahmen 4 anzuordnen.

## Patentansprüche

1. Selbstfahrende landwirtschaftliche Arbeitsmaschine mit einem sich über Räder auf den Boden abstützenden Rahmen, einem Antriebsmotor und einem Anbauraum zur Aufnahme zumindest eines Vorratsbehälters für zu verteilende Materialien, **dadurch gekennzeichnet, dass** der Rahmen (4) derart ausgestaltet und der Antriebsmotor (5) an dem Rahmen (4) derart angeordnet ist, dass der Vorratsbehälter (8,9) unterhalb des Rahmens (4) und des Antriebsmotors (5) angeordnet ist, so dass der Rahmen (4) den Vorratsbehälter (8,9) zumindest teilweise übergreift.

2. Arbeitsmaschine nach Anspruch 1, **dadurch gekennzeichnet, dass** der Rahmen (4) als Portalrahmen ausgebildet ist.

3. Arbeitsmaschine nach Anspruch 1, **dadurch gekennzeichnet, dass** der Antriebsmotor (5) oberhalb des am Rahmen (4) anzuordnenden Vorratsbehälters (8,9) angeordnet ist.

4. Arbeitsmaschine nach einem oder mehreren de vorstehenden Ansprüche, **dadurch gekennzeichnet, dass** der Vorratsbehälter (8,9) in austauschbarer Weise am Rahmen (4) angeordnet ist.

5. Arbeitsmaschine nach einem oder mehreren der vorstehenden Ansprüche, **dadurch gekennzeichnet, dass** Vorratsbehälter (8,9) für die Aufnahme von Flüssigkeiten und/oder pulverige oder körnige Materialien vorgesehen ist.

6. Arbeitsmaschine nach einem oder mehreren der vorstehenden Ansprüche, **dadurch gekennzeichnet, dass** bei Anordnung eines Flüssigkeit aufnehmenden Vorratsbehälters (9) die die Flüssigkeit zu einem am Rahmen (4) angeordneten Verteilergestänge (11) fördernden und dosierenden Pumpen und Dosierelemente (16) oberhalb des Vorratsbehälters (9) angeordnet sind.

7. Arbeitsmaschine nach einem oder mehreren der vorstehenden Ansprüche, **dadurch gekennzeichnet, dass** der Vorratsbehälter (8) für pulverförmige oder körnige Materialien sich in Längsrichtung unterhalb des Rahmens (4) und des Antriebsmotors (5) erstreckt und sich zumindest teilweise in Längsrichtung der Arbeitsmaschine gesehen sich auch außerhalb des sich oberhalb des Vorratsbehälters (8) befindlichen Antriebsmotor (5) erstreckt und in diesem Bereich einen Einfülltrichter (13) aufweist.
